# EUROPEAN PATENT SPECIFICATION

(11) **EP 0 547 315 B1**
(45) Date of publication and mention of the grant of the patent: **24.04.1996**
(21) Application number: 92117184.9
(22) Date of filing: 08.10.1992
(51) Int. Cl.: B29C 47/00, B29C 47/36

(54) **Mechanism for forming plastic boards**
Vorrichtung zur Herstellung von Kunststoffplatten
Dispositif pour le formage des plateaux en matière plastique

(30) Priority: 18.12.1991 DE 9115694 U
(43) Date of publication of application: 23.06.1993
(73) Proprietor: Chern, Ruey-Chyuan, Taichung (TW)
(72) Inventor: Chern, Ruey-Chyuan, Taichung (TW)
(74) Representative: Casalonga, Axel

(56) References cited:
- EP-A- 0 435 078
- DE-A- 3 603 432
- GB-A- 643 990
- GB-A- 685 038
- US-A- 3 148 231
- US-A- 3 718 413
- US-A- 3 797 987
- US-A- 3 854 859
- US-A- 4 057 385

## Description

The present invention relates to a mechanism for forming plastic board according to the precharacterising part of claim 1. Generally, plastic boards are formed by injection molding method comprising injecting melted plastic materials into molds. Normally, the plastic materials are melted in a place separated from the molds and are supplied to the molds via tubes or pipes which are exposed to the air such that the plastic materials are apt to be cooled and such that the fluidity of the plastic materials is bad.

US-A-3 148 231 describes an extrusion apparatus for extruding plastics comprising two pumps such as gear pumps, with heat regulation means and pipes for the communication with the feeding means and the final processing apparatus. This document does not describe the final processing apparatus.

DE-A-36 03 432 describes an extrusion device for thermoplastic materials which structure comprises a pipe for the flowing of the material, defined between a support and a mandrel, and an injection pipe defined between injection lips. The pipe is divided in at least two single pipes by means of a frame. The single pipes are meeting again before the injection pipe. The frame is secured to the holder. This document does not cite the problems of cooling.

US-A-3 854 859 discloses a shaping head for plastic molding machines with a face of the inner channel, defined by sectionalized movable plates in order to manufacture the sheet of plastic material with ribs having various space and various heights.

EP-A -0 435 078 describes an extrusion injector for manufacturing plastic sheets with hollow chambers. Two injectors are defined between lips and a frame including at its end, transverse grooves for extruding crossbars.

GB-A-685 038 describes an apparatus for manufacturing thermoplastic strip material formed of differently coloured longitudinal stripes with two extrusion machines, a nozzle with spaced channels for extruding the material of the first machine and an outlet member surrounding the nozzle and forming other channels defined between the wall of the outlet member and grooves of the nozzle. The material of the second machine is extruded through said other channels.

US-A-4 057 385 describes a deckle cooling means to prevent leakage in an extrusion machine. The cooling means are in contact with the part of the die structure defining the entrance of the slit. The technical problem solved by this device is to vary the length of the slit and to adjust the width of the plastic film without leakage of the resin. The thermoplastic material is cooled at its ends but not on all the width of the film

The primary object of the present invention is to provide a mechanism for forming plastic board, in which the fluidity of the melted plastic materials is good.

This object is attained according to the invention by a mechanism for forming plastic boards, comprising
- a base having a chamber, a first pump, a first passage and a lateral pathway ;
- at least one housing, having a second pump and a second passage ;
- at least one heating element disposed on the housing ;
- a container disposed above the housing
the container being provided for receiving plastic materials which may flow into a space to form a plastic board therein via the pathway by the first pump and via the chamber, the first and second passage by the second pump, said plastic materials can be heated by the heating element,
- a first mold and a second mold disposed in the base respectively above and below the pathway and respectively having a first mold cavity and a second mold cavity which form said space communicating with the pathway ;
- a block which includes a body received in said space, said body of the block including at least one channel longitudinally formed therein through which cooling air may flow, said block extending over the entire width of the first and second molds. Further embodiments of the invention are disclosed in the dependent claims.

The advantages of the present invention will become apparent from a careful reading of the detailed description of two embodiments of the invention provided hereinbelow as non-limitative examples, with appropriate reference to the accompanying drawings.
FIG. 1 is a schematic view of a mechanism for forming plastic board in accordance with the present invention;
FIG. 2 is a partial perspective view of the molds of the mechanism;
FIG. 3 is an end view of the molds which are separated;
FIG. 4 is a partial perspective view of the molds, in which the molds are opened;
FIG. 5 is a plane view of the mold.

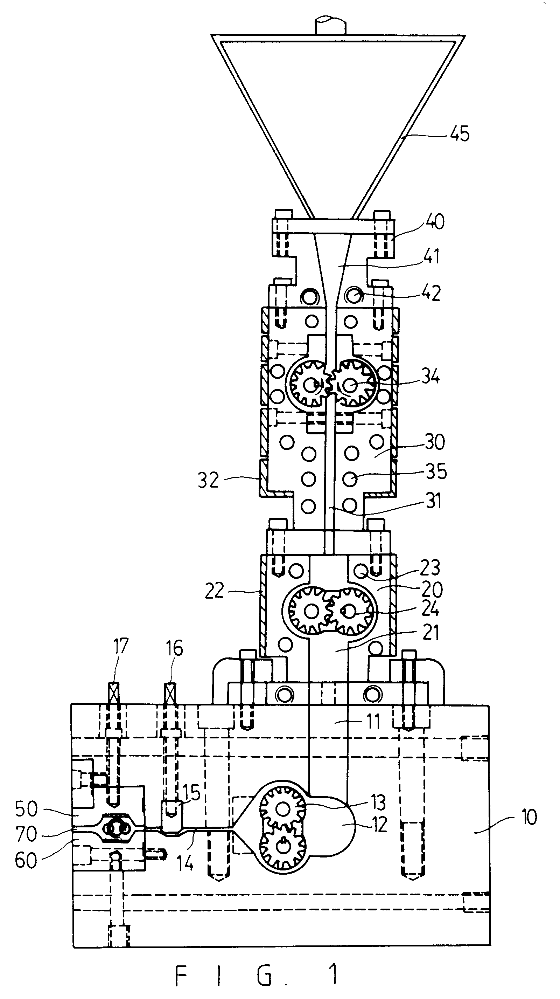

Referring to the drawings and initially to FIG. 1, a mechanism for forming plastic board in accordance with the present invention comprises generally a base 10, and a first housing 20, a second housing 30, a third housing 40 and a container 45 fixed in series on the base 10. Each of the base 10 and the housings 20, 30, 40 has a passage 11, 21, 31, 41 formed therein and aligned with one another and communicated with the container 45. Plastic materials, especially grain type plastic materials are disposed and continued in the container 45 and can flow into the passages 11, 21, 31 and 41.

The third housing 40 includes two cooling pipes 42 for cooling the plastic materials flowing through the passage 41 of the third housing 40. Each of the first and second housings 20, 30 includes a heating element 22, 32 provided on the outer surface thereof, and a plurality of heating pipes 23, 33 and a pump 24, 34 disposed therein. The heating elements 22, 32 and the heating pipes 23, 33 are provided to heat the plastic materials in order to increase the fluidity of the plastic materials. The pumps 24, 34 are provided for mixing and pumping the plastic materials.

The base 10 includes a chamber 12 communicated with the passage 11 and having a pump 13 disposed therein, and a pathway 14 formed and communicated with the chamber 12. The heated or melted plastic materials may flow into the chamber 12 via the passage 11 and may be caused to flow through the pathway 14 by the pump 13. A stop 15 is disposed in the base 10 and can be caused to move toward and move away from the pathway 14 by a bolt 16 so as to adjust the opening size of the pathway 14 and to control the flowing of the plastic materials.

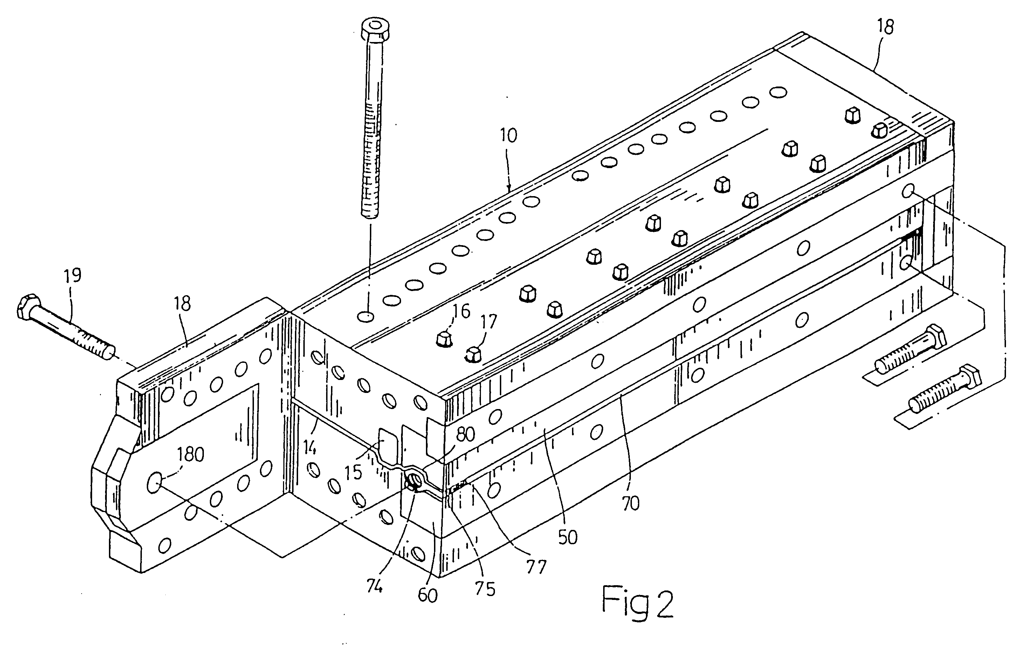

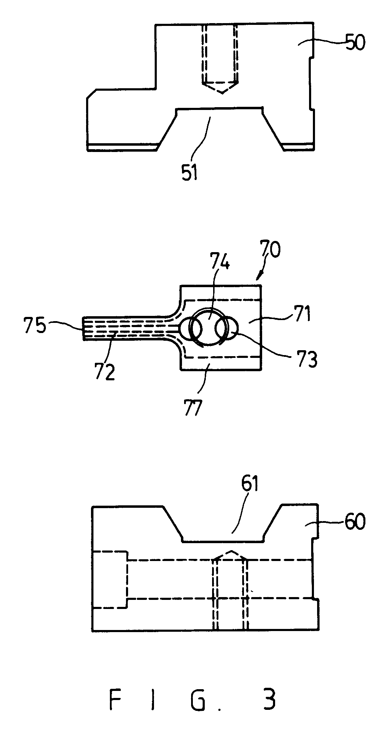

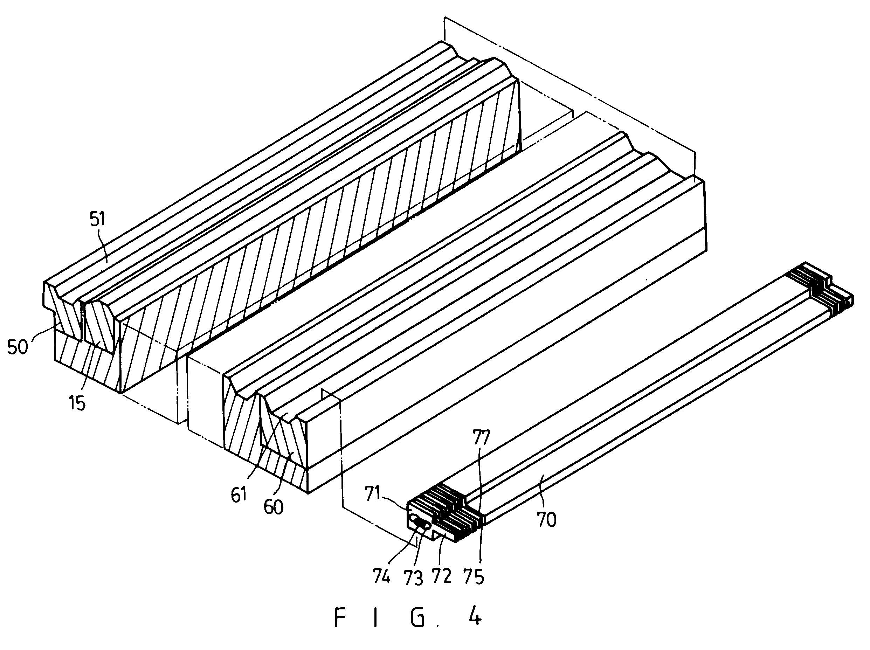

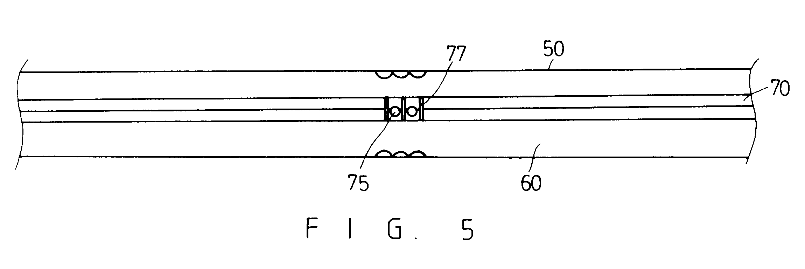

Referring next to FIGS. 2, 3, 4 and 5, an upper mold 50 and a lower mold 60 are disposed and fixed in the base 10, and a block 70 is disposed between the upper mold 50 and the lower mold 60. The upper mold 50 is fixed in the base 10 by such as bolts 17 and located above the pathway 14, and the lower mold 60 is also fixed in the base 10 by bolts and located below the pathway 14. It is preferable that a door 18 is fixed on each side of the base 10 and engaged to the base 10 by bolts 19. The door 18 includes an opening 180 connected to an air source (not shown). The upper mold 50 includes a mold cavity 51 formed in the bottom portion thereof, and the lower mold 60 includes a mold cavity 61 formed in the upper portion thereof. The mold cavities 51, 61 form a space for receiving the block 70 and communicating with the pathway 14 so that plastic materials may flow into the mold cavities 51, 61.

The block 70 includes a body 71 received in the mold cavities 51, 61 and having a rectangular cross section, and a flange 72 laterally extended outward from the body 71 and engaged between the molds 50, 60. A gap 80 is formed between the block 70 and the molds 50, 60. The flange 72 has a height smaller than that of the body 71. The body 71 of the block 70 includes two channels 73 longitudinally formed therein and parallel with each other. A screw hole 74 is formed on one end of the body 71 and communicated with the channels 73 and communicated with the opening 180 of the door 18 when the door 18 is closed so that cooling air may flow into the channels 73 for cooling purposes. A plurality of apertures 75 are laterally formed in the flange 72 and communicated with one of the channels 73 so that cooling air may also flow into the apertures 75. A plurality of grooves 77 are formed around the outer peripheral surface of the block 70 and communicated with the gap 80 so that plastic materials may flow into the gap 80 and the grooves 77. After the melted plastic materials fill the gap 80 and the grooves 77, the cooling air flowing through the apertures 75 and the channels 73 is capable of cooling the melted plastic materials so as to form a plastic board. The plastic board (not shown) includes a flat portion formed by the gap 80 and a plurality of ribs formed by the grooves 77.

Accordingly, the melted plastic materials need not be supplied through pipes which is exposed to the air. The melted plastic materials can be heated and melted by the heating elements 22, 32 and the heating pipes 23, 33 and can be pumped by the pumps 13, 24, 34 such that the fluidity of the plastic materials is greatly increased.

Although this invention has been described with a certain degree of particularity, it is to be understood that the present disclosure has been made by way of example only and that numerous changes in the detailed construction and the combination and arrangement of parts may be resorted to without departing from the scope of the invention as hereinafter claimed.

## Claims

1. A mechanism for forming plastic boards, comprising
- a base (10) having a chamber (12), a first pump (13), a first passage (11) and a lateral pathway (14) ;
- at least one housing (20, 30, 40), having a second pump (24, 34) and a second passage (21, 31, 41)
- at least one heating element (22, 32) disposed on the housing (20, 30) ;
- a container (45) disposed above the housing (40)
the container (45) being provided for receiving plastic materials which may flow into a space to form a plastic board therein via the pathway (14) by the first pump (13) and via the chamber (12), the first and second passage (11, 21, 31, 41) by the second pump (24, 34), said plastic materials can be heated by the heating element (22, 32)
characterized in that it comprises :
- a first mold (50,) and a second mold (60,) disposed in the base (10) respectively above and below the pathway (14) and respectively having a first mold cavity (51) and a second mold cavity (61) which form said space communicating with the pathway (14) and
- a block (70) which includes a body (71) received in said space, said body (71) of the block (70) including at least one channel (73) longitudinally formed therein through which cooling air may flow,
said block (70) extending over the entire width of the first and second moulds (50, 60).

2. A mechanism according to claim 1, wherein the housing (20, 30) includes at least one heating pipe (23, 33) formed therein so as to heat the plastic materials.

3. A mechanism according to claim 1 or 2, wherein the base (10) further includes a stop (15) disposed above the pathway (14) and located between the chamber (12) and the first mold (50), the stop (15) is coupled to the base (10) by at least one bolt (16) and can be caused to move toward and to move away from the pathway (14) when the bolt (16) is rotated, whereby, flowing of the plastic materials can be controlled.

4. A mechanism according to any one of claims 1 to 3, wherein the first mold cavity (51) is formed in a bottom portion of the first mold (50) and the second mold cavity (61) is formed in an upper portion of the second mold (60), said body (71) being arranged such that a gap (80) is formed between the body (71) and the first mold (50) and the second mold (60) and communicating with the pathway (14), said block (70) includes a flange (72) laterally extending from the body (71), and said block (70) includes a plurality of grooves (77) formed therearound and communicating with the gap (80) so that the plastic materials may flow into the gap (80) and the grooves (77).

5. A mechanism according to claim 4, wherein the flange (72) of the block (70) includes a plurality of apertures (75) laterally formed therein and communicating with the channel (73) of the body (71) so that cooling air may flow into the apertures (75).

## Patentansprüche

1. Vorrichtung zum Formen von Kunststoffplatten, umfassend
- eine Basis (10), die eine Kammer (12), eine erste Pumpe (13), einen ersten Durchlaß (11) und einen Seitenpfad (14) aufweist;
- wenigstens ein Gehäuse (20, 30, 40) das eine zweite Pumpe (24, 34) und einen zweiten Durchlaß (21, 31, 41) aufweist;
- wenigstens ein Heizelement (22, 32), das auf dem Gehäuse (20, 30) angeordnet ist;
- einen Behälter (45), der oberhalb des Gehäuses (40) angeordnet ist,
wobei der Behälter (45) vorgesehen ist, um Kunststoffmaterialien aufzunehmen, die mittels der ersten Pumpe (13) über den Pfad (14) und mittels der zweiten Pumpe (24, 34) über die Kammer (12), den ersten und zweiten Durchlaß (11, 21, 31, 41) in einen Raum fließen können, um darin eine Kunststoffplatte zu formen,
wobei die Kuststoffmaterialien mittels des Heizelements (22, 32) erwärmt werden können,
dadurch gekennzeichnet, daß sie umfaßt:
- eine erste Form (50) und eine zweite Form (60), die in der Basis (10) jeweils oberhalb und unterhalb des Pfades (14) angeordnet sind und jeweils einen ersten Formenhohlraum (51) und einen zweiten Formenhohlraum (61) aufweisen, die den in Verbindung mit dem Pfad (14) stehenden Raum bilden und
- einen Block (70), der einen im Raum aufgenommenen Körper (71) umfaßt, wobei der Körper (71) des Blocks (70) wenigstens einen Kanal (73) umfaßt, der in Längsrichtung darin gebildet ist, durch den Kühlluft strömen kann, wobei sich der Block (70) über die ganze Breite der ersten und zweiten Formen (50, 60) erstreckt.

2. Vorrichtung nach Anspruch 1, bei der das Gehäuse (20, 30) wenigstens eine Heizleitung (23, 33) umfaßt, die darin gebildet ist, um die Kunststoffmaterialien zu erwärmen.

3. Vorrichtung nach Anspruch 1 oder 2, bei der die Basis (10) weiter eine Stoppvorrichtung (15) umfaßt, die oberhalb des Pfades (14) angeordnet ist und sich zwischen der Kammer (12) und der ersten Form (50) befindet, die Stoppvorrichtung (15) mittels wenigstens eines Bolzens (16) mit der Basis (10) verbunden ist und veranlaßt werden kann, sich in Richtung zu und fort von dem Pfad (14) zu bewegen, wenn der Bolzen (16) gedreht wird, wodurch Fließen der Kunststoffmaterialien gesteuert werden kann.

4. Vorrichtung nach einem der Ansprüche 1 bis 3, bei der der erste Formenhohlraum (51) in einem unteren Abschnitt der ersten Form (50) gebildet ist und der zweite Formenhohlraum (61) in einem oberen Abschnitt der zweiten Form (60) gebildet ist, der Körper (71) derart angeordnet ist, daß ein Zwischenraum (80) zwischen dem Körper (71) und der ersten Form (50) und der zweiten Form (60) gebildet wird, und mit dem Pfad (14) in Verbindung steht, der Block (70) einen Flansch (72) umfaßt, der sich seitlich von dem Körper (71) fort erstreckt, und der Block (70) eine Vielzahl von Rillen (77) umfaßt, die um ihn herum gebildet sind und mit dem Zwischenraum (80) in Verbindung stehen, so daß die Kunststoffmaterialien in den Zwischenraum (80) und die Rillen (77) fließen können.

5. Vorrichtung nach Anspruch 4, bei der der Flansch (72) des Blocks (70) eine Vielzahl von Öffnungen (75) umfaßt, die seitlich darin gebildet sind und mit dem Kanal (73) des Körpers (71) in Verbindung stehen, so daß Kühlluft in die Öffnungen (75) strömen kann.

## Revendications

1. Mécanisme pour le formage de plateaux en matière plastique, qui comprend :
- une base (10) avec une chambre (12), une première pompe (13), une première voie (11) et un passage latéral (14),
- au moins un boîtier (20, 30, 40) avec une seconde pompe (24, 34) et une seconde voie (21, 31, 41),
- au moins un élément chauffant (22, 32) placé sur le boîtier (20, 30),
- un récipient (45) placé au-dessus du boîtier (40), le récipient (45) servant à recevoir de la matière plastique qui peut s'écouler dans un espace vide pour y former un plateau en matière plastique, traversant ledit passage (14) grâce à ladite première pompe (13) et traversant ladite chambre (12) et les première et seconde voies (11, 21, 31, 41) grâce à ladite seconde pompe (24, 34), ladite matière plastique pouvant être chauffée par l'élément chauffant (22, 32), caractérisé en ce qu'il comprend :
- un premier moule (50) et un second moule (60) disposés dans la base (10) respectivement au-dessus et au-dessous du passage (14) et comportant respectivement une première cavité de moule (51) et une seconde cavité de moule (61) qui forment ledit espace vide qui communique avec le passage (14), et
- un bloc (70) qui comprend un corps (71) reçu dans ledit espace vide, ledit corps (71) dudit bloc (70) comportant au moins un canal (73), formé dans le sens longitudinal, par lequel peut s'écouler de l'air de refroidissement, ledit bloc s'étendant au-dessus de toute la largeur des premier et second moules (50, 60).

2. Mécanisme selon la revendication 1, dans lequel le boîtier (20, 30) comprend au moins un tube de chauffage (23, 33) qui y est formé de façon à chauffer la matière plastique.

3. Mécanisme selon la revendication 1 ou 2, dans lequel la base (10) comprend en outre une butée (15) placée au-dessus du passage (14) et située entre la chambre (12) et le premier moule (50), la butée (15) étant couplée à la base (10) par au moins un bouton (16) et pouvant être déplacée pour s'éloigner et s'approcher du passage (14) quand on fait tourner le boulon (16), grâce à quoi il est possible de commander l'écoulement de la matière plastique.

4. Mécanisme selon l'une quelconque des revendications 1 à 3, dans lequel la première cavité de moule (51) est formée dans une partie inférieure du premier moule (50) et la seconde cavité de moule (61) est formée dans une partie supérieure du second moule (60), ledit corps (71) est disposé de telle sorte qu'un intervalle (80) soit formé entre le corps (71) et le premier moule (50) et le second moule (60) en communiquant avec le passage (14), ledit bloc (70) comprend un rebord (72) qui part du corps (71) latéralement et ledit bloc (70) comprend une pluralité de rainures (77) formées de façon périphérique et communiquant avec l'intervalle (80) de sorte que la matière plastique peut s'écouler dans l'intervalle (80) et dans les rainures (77).

5. Mécanisme selon la revendication 4, dans lequel le rebord (72) du corps (70) comprend une pluralité d'orifices (75) formés latéralement et communiquant avec le canal (73) du corps (71) afin que l'air de refroidissement puisse s'écouler par les orifices (75).
